# EUROPEAN PATENT SPECIFICATION

(11) **EP 4 676 811 B1**
(45) Date of publication and mention of the grant of the patent: **19.08.2026**
(21) Application number: 24812450.5
(22) Date of filing: 20.11.2024
(51) Int. Cl.: B62J 1/00, B62J 1/10, B62J 1/26

(54) **AN ORTHOPEDIC SHOCK-ABSORBING BICYCLE SADDLE**
ORTHOPÄDISCHER STOSSDÄMPFENDER FAHRRADSATTEL
SELLE DE BICYCLETTE ORTHOPÉDIQUE ABSORBANT LES CHOCS

(30) Priority: 27.03.2024 LV 240023
(43) Date of publication of application: 14.01.2026
(73) Proprietor: Tytjuk, Alexander, 52538 Selfkant (DE)
(72) Inventor: Tytjuk, Alexander, 52538 Selfkant (DE)
(74) Representative: Fortuna, Jevgenijs
(86) International application number: PCT/EP2024/082916
(87) International publication number: WO 2025/201669

(56) References cited:
- WO-A1-00/00379
- WO-A1-2009/040771
- WO-A1-95/19907
- US-A1- 2014 375 092
- US-B2- 10 556 632

## Description

### Technical Field

The invention relates to the field of seating structures, in particular, to an orthopedic shock-absorbing bicycle saddle.

### Background Art

Cycling, particularly over long distances, presents certain challenges, including the compression of nerves and arteries as well as upper and lower back discomfort. Prolonged periods seated on a firm bicycle saddle can lead to the compression of nerves and arteries critical to the function of reproductive organs. Additionally, maintaining a hunched posture for extended durations can exert undue stress on both the upper and lower back regions.

One of the ways to increase riding comfort is to provide a comfortable saddle, relieving saddle pain caused by frequent friction and road impact. A saddle can reduce the pressure and friction on the inner thighs and groin area, which are common discomfort points for cyclists. This issue is addressed in many prior art solutions, providing different shock absorbing saddles.

Traditional bicycle saddles can create concentrated pressure points, particularly. There are known mechanisms that allow for the inclination and return of lateral parts of the saddle in response to a cyclist's leg movement (US7494181B2, EP0467541A1, GB2524471A, CN204606016U). The moving lateral parts can alleviate these pressure points by dynamically adjusting to the rider's movement, promoting better blood circulation and reducing the risk of numbness or discomfort. By allowing a more natural leg movement, the adaptive lateral parts can contribute to a more efficient pedaling action.

There are also known saddles specifically designed to mitigate shock absorption, addressing this common concern among cyclists (US619244, NL2030139B1, WO00/00379). WO 00/00379 A1 discloses the preamble of claim 1.

Despite improvements in bicycle saddles to enhance comfort for long rides, challenges such as nerve compression and back pain persist, with existing saddles only partially easing these issues through shock absorption, or movement adjustment.

### Summary of Invention

The invention provides an orthopedic shock-absorbing bicycle saddle, comprising: a seat element having a central top portion, two lateral top portions: left and right, a bottom portion, and a support element underlying the seat element and designed to be connected to a bicycle frame. The support element having a front end and a rear end. The central top portion is designed to at least partly be in contact with a cyclist. The central top portion having a rear part and an elongate front part. The bottom portion having a rear part and a front part. At its elongate front part the seat element being pivotally attached to the front end of the support element, allowing the seat element to pivot with respect to the support element. The saddle further comprising a damper filled with a compressible substance. The damper comprises a channel with a valve, designed to allow controllable adjustment of the amount of the compressible substance in the damper, thereby adjusting pressure in the damper to optimal. The support element and/or the seat element is provided with a cavity, adapted to accommodate therein the damper, so that the substantial part of the seat element can lean on the damper, which thereby limits the range of pivoting movement of the seat element with respect to the support element. The left and right lateral top portions are rotatably mounted on the seat element in a spaced apart configuration to the left and right sides of the central top portion by left and right horizontal pivot means having horizontal left and right pivot axes substantially positioned proximal the central top portion's rear part, to be close to or directly under where a cyclist's ischial tuberosities would typically reside. The horizontal pivot axes are arranged substantially orthogonal to a vertical pivot axis of the central top portion. Each lateral top portion is arranged to rotate separately from the other about the horizontal pivot axis, and rotate jointly with the other about the vertical pivot axis, enabling dynamic adaptation to the cyclist's leg movements. The damper comprises at least three interconnected chambers: a first, a second, a third, and, optionally, a fourth, designed to sequentially transfer the compressible substance through throttles between adjacent chambers, thereby facilitating a controlled and gradual shock absorption by directing the compressible substance from the first chamber to the second chamber via a first throttle, from the second chamber to the third chamber via a second throttle, and, optionally, from the third chamber to the fourth chamber via a third throttle.

The left and right horizontal pivot means comprise a left and right lateral top portions stopper mechanisms designed to limit the range of rotation angle of the left and right lateral top portions; the stopper mechanisms comprising: a stopper releasably fixed in each of the horizontal left and right pivot axes; a sleeve located within each, the left and right lateral top portions is adapted to at least partially encase the horizontal left and right pivot axes; the sleeve is provided with a slot configured to engage with the stopper, permitting controlled rotation of the lateral top portions within the defined range, thereby allowing for limitation of the rotation angle of the left and right lateral top portions.

The saddle may further be provided with a return mechanism incorporating a spring located within each of the horizontal left and right pivot axes, with the end of the spring engaged with the sleeve, which is designed to store energy upon the rotation of the left and right lateral top portions and release said energy to return the top portions to their initial position, thereby providing a consistent and automatic return force for maintaining ergonomic alignment and a cyclist's comfort.

### Brief Description of Drawings

Fig. 1 shows perspective view of one embodiment of the orthopedic shock-absorbing bicycle saddle;
Fig. 2 - is a perspective view of the orthopedic shock-absorbing bicycle saddle without left and right lateral top portions;
Fig. 3 - is a left side view of the saddle's left lateral top portion;
Fig. 4 - is a left side view of the saddle showing horizontal pivot axis of the left lateral top portion;
Fig. 5 - is a left side cross-sectional view of a bicycle saddle;
Fig. 6 - is a left side cross-sectional view of another embodiment of the bicycle saddle, showing four chamber damper.

### Detailed Description of Invention

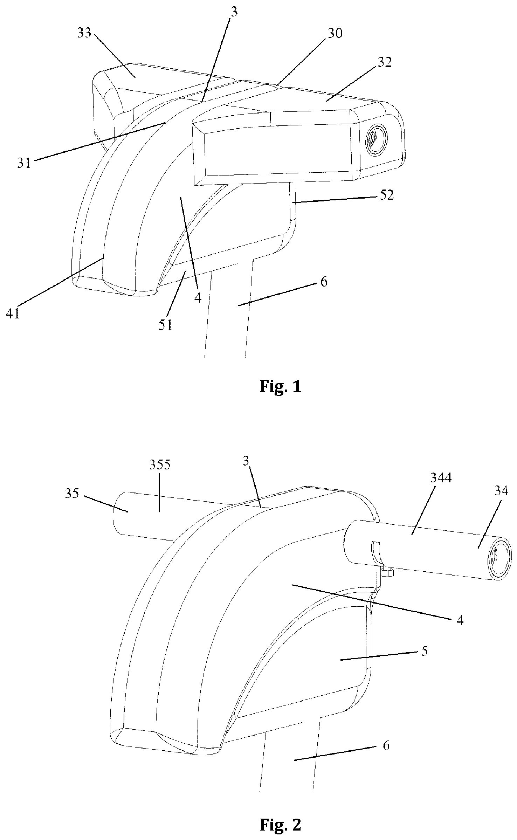

The orthopedic shock-absorbing saddle (Fig. 1, 2), comprises a seat element (2) having a central top portion (3), two lateral top portions: left (32) and right (33), a bottom portion (4), and a support element (5) underlying the seat element (2) and designed to be connected to a bicycle frame, optionally using a seatpost (6).

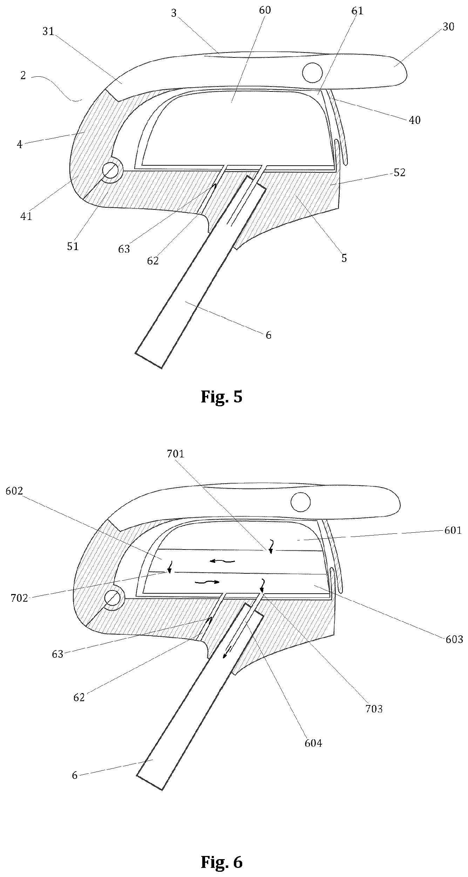

The support element (5) having a front end (51) and a rear end (52). The central top portion (3) is designed to at least partly be in contact with a cyclist. The central top portion (3) having a rear part (30) and an elongate front part (31). The bottom portion (4) having a rear part (40) and a front part (41). At its elongate front part (41) the seat element (2) being pivotally attached to the front end (51) of the support element (5), allowing the seat element (2) to pivot with respect to the support element (5). The saddle further comprising a damper (60) filled with a compressible substance. The compressible substance can be a gas (including air), a compressible fluid, or a compressible gel-forming composition. The support element (5) and/or the seat element (2) is provided with a cavity (61), adapted to accommodate therein the damper (60), so that the substantial part of the seat element (2) can lean on the damper (60), which thereby limits the range of pivoting movement of the seat element (2) with respect to the support element (5). The damper (60) comprises a channel (62) with a valve (63), designed to allow controllable adjustment of the amount of the compressible substance in the damper (60), thereby adjusting pressure in the damper (60) to optimal, for instance 0.1-1.5 bar (Fig. 5).

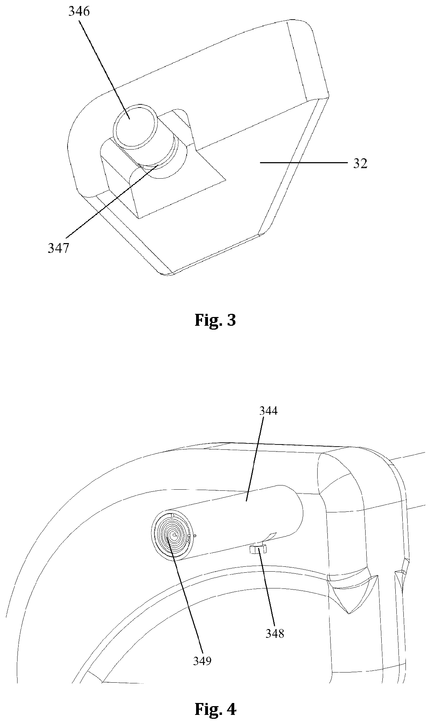

According to the invention, the left (32) and right (33) lateral top portions (Fig. 3) are rotatably mounted on the seat element (2) in a spaced apart configuration to the left and right sides of the central top portion (3) by left (34) and right (35) horizontal pivot means having horizontal left (344) and right (355) pivot axes substantially positioned proximal the top portion's rear part (30) - Fig. 4, to be close to or directly under where a cyclist's ischial tuberosities would typically reside, which horizontal pivot axes (334, 335) are arranged substantially orthogonal to a vertical pivot axis of the central top portion (3). Each lateral top portion (32, 33) is arranged to rotate separately from the other about the horizontal pivot axis, and rotate jointly with the other about the vertical pivot axis, enabling dynamic adaptation to the cyclist's leg movements.

Further, according to the invention, the damper (60) comprises at least three, (preferably four) interconnected chambers (Fig. 6): a first (601), a second (602), a third (603), and, optionally, a fourth (604), designed to sequentially transfer the compressible substance through throttles between adjacent chambers, thereby facilitating a controlled and gradual shock absorption by directing the compressible substance from the first chamber (601) to the second chamber (602) via a first throttle (701), from the second chamber (602) to the third chamber (603) via a second throttle (702), and, optionally, from the third chamber (603) to the fourth chamber (604) via a third throttle (703), enhancing damping performance and cyclist comfort by regulating airflow for smooth and efficient damping during compression and return phases. Upon activation, the compressible substance from the first chamber (601) moves through the first throttle (701), e.g. with a diameter of 0.5-5 mm, to the second chamber (602), from which through the second throttle (702), e.g. with a diameter of 0.3-4 mm, the compressible substance moves to the third chamber (603). According to embodiment with four chambers (601-604), the compressible substance, from the third chamber (603), through the third throttle (703), e.g. with a diameter of 0.5-1.5 mm and a length of 20-70 mm, moves to the fourth chamber (604). The system of throttles and the serpentine motion of air through the chambers result in a smooth damping effect, wherein the damper compresses within 0.3-0.4 seconds and returns within 0.3-0.5 seconds, thereby facilitating smooth and efficient shock absorption compared to a prior art two-chamber air damper system that operated with a compression time of 0.1 seconds and a return time of 0.15 seconds, enhancing the overall performance and comfort for the cyclist.

According to the preferred embodiment, the last chamber of the damper (60), i.e. depending on the embodiment, either the third chamber (603), or the fourth chamber (604), is located in the inner cavity of the seatpost (6).

According to one embodiment, each of the left (32) and right (33) lateral top portions is defined by a shape having a configuration wherein one side is longer than the opposite side, with the longer side oriented inward towards the central top portion (3) and the shorter side facing outward. The left (32) and right (33) lateral top portions are designed to dynamically support a cyclist's *ischial tuberosities,* thereby accommodating various pedaling motions and riding positions while ensuring optimal pressure distribution and ergonomic support. According to particular embodiment, each lateral top portion (32, 33) is substantially trapezoidal in shape, and oriented with their longer base facing inward towards the central top portion (3) and the shorter base facing outward.

According to another embodiment, the left (32) and right (33) lateral top portions are of a rounded, oval, or ellipsoidal profiles to form a concave surface; the left (32) and right (33) lateral top portions are designed to dynamically support a cyclist's *ischial tuberosities.*

According to yet another preferred embodiment, the left (34) and right (35) horizontal pivot means comprise a left (32) and right (33) lateral top portions stopper mechanisms designed to limit the range of rotation angle of the left (32) and right (33) lateral top portions. The stopper mechanisms comprising: a stopper (348) releasably fixed in each of the horizontal left (344) and right (355) pivot axes; a sleeve (346) located within each, the left (32) and right (33) lateral top portions is adapted to at least partially encase the horizontal left (344) and right (355) pivot axes. The sleeve (346) is provided with a slot (347) - Fig. 3, configured to engage with the stopper (348), permitting controlled rotation of the lateral top portions within the defined range, thereby allowing for limitation of the rotation angle of the left (32) and right (33) lateral top portions. This stopper mechanism acts as a mechanical limit stop, ensuring that while the lateral top portions can flexibly adapt to the rider's movements and adjust for comfort and efficiency, they do not exceed a safe and ergonomically beneficial range of motion.

The saddle may be further provided with a return mechanism incorporating a spring (349) (e.g. a flat spiral spring) located within each of the horizontal left (344) and right (355) pivot axes, with the end of the spring (349) engaged with the sleeve (346), which is designed to store energy upon the rotation of the left (32) and right (33) lateral top portions and release said energy to return the top portions (32, 33) to their initial position, supplementing the return force generated by the cyclist's leg movements, thereby providing a consistent and automatic return force for maintaining ergonomic alignment and a cyclist's comfort.

## Claims

1. An orthopedic shock-absorbing bicycle saddle, comprising: a seat element (2) having a central top portion (3), two lateral top portions: left (32) and right (33), a bottom portion (4), and a support element (5) underlying the seat element (2) and designed to be connected to a bicycle frame, optionally using a seatpost (6); the support element (5) having a front end (51) and a rear end (52); the central top portion (3) is designed to at least partly be in contact with a cyclist; the central top portion (3) having a rear part (30) and an elongate front part (31); the bottom portion (4) having a rear part (40) and a front part (41); at its elongate front part (41) the seat element (2) being pivotally attached to the front end (51) of the support element (5), allowing the seat element (2) to pivot with respect to the support element (5); the saddle further comprising a damper (60) filled with a compressible substance; the support element (5) and/or the seat element (2) is provided with a cavity (61), adapted to accommodate therein the damper (60), so that the substantial part of the seat element (2) can lean on the damper (60), which thereby limits the range of pivoting movement of the seat element (2) with respect to the support element (5); the damper (60) comprises a channel (62) with a valve (63), designed to allow controllable adjustment of the amount of the compressible substance in the damper (60), thereby adjusting pressure in the damper (60) to optimal; wherein the left (32) and right (33) lateral top portions are rotatably mounted on the seat element (2) in a spaced apart configuration to the left and right sides of the central top portion (3) by left (34) and right (35) horizontal pivot means having horizontal left (344) and right (355) pivot axes substantially positioned proximal the central top portion's rear part (30), to be close to or directly under where a cyclist's ischial tuberosities would typically reside, which horizontal pivot axes (334, 335) are arranged substantially orthogonal to a vertical pivot axis of the central top portion (3); and wherein each lateral top portion (32, 33) is arranged to rotate separately from the other about the horizontal pivot axis, and rotate jointly with the other about the vertical pivot axis, enabling dynamic adaptation to the cyclist's leg movements; **characterized in that** the damper (60) comprises at least three interconnected chambers: a first (601), a second (602), a third (603), and, optionally, a fourth (604), designed to sequentially transfer the compressible substance through throttles between adjacent chambers, thereby facilitating a controlled and gradual shock absorption by directing the compressible substance from the first chamber (601) to the second chamber (602) via a first throttle (701), from the second chamber (602) to the third chamber (603) via a second throttle (702), and, optionally, from the third chamber (603) to the fourth chamber (604) via a third throttle (703).

2. The saddle of claim 1, wherein the third (603), or the fourth (604) chamber of the damper (60) is located in the inner cavity of the seatpost (6).

3. The saddle of claim 1 or 2, wherein each of the left (32) and right (33) lateral top portions is defined by a shape having a configuration wherein one side is longer than the opposite side, with the longer side oriented inward towards the central top portion (3) and the shorter side facing outward; the left (32) and right (33) lateral top portions are designed to dynamically support a cyclist's *ischial tuberosities,* thereby accommodating various pedaling motions and riding positions while ensuring optimal pressure distribution and ergonomic support.

4. The saddle of claim 3, wherein each lateral top portion (32, 33) is substantially trapezoidal in shape, and oriented with their longer base facing inward towards the central top portion (3) and the shorter base facing outward.

5. The saddle of claim 1 or 2, wherein each of the left (32) and right (33) lateral top portions is defined by a shape having a configuration wherein the lateral top portions are of a rounded, oval, or ellipsoidal profiles to form a concave surface; the left (32) and right (33) lateral top portions are designed to dynamically support a cyclist's *ischial tuberosities,* thereby accommodating various pedaling motions and riding positions while ensuring optimal pressure distribution and ergonomic support.

6. The saddle of any preceding claims, wherein the left (34) and right (35) horizontal pivot means comprise a left (32) and right (33) lateral top portions stopper mechanisms designed to limit the range of rotation angle of the left (32) and right (33) lateral top portions; the stopper mechanisms comprising:
- a stopper (348) releasably fixed in each of the horizontal left (344) and right (355) pivot axes;
- a sleeve (346) located within each, the left (32) and right (33) lateral top portions is adapted to at least partially encase the horizontal left (344) and right (355) pivot axes; the sleeve (346) is provided with a slot (347) configured to engage with the stopper (348), permitting controlled rotation of the lateral top portions within the defined range, thereby allowing for limitation of the rotation angle of the left (32) and right (33) lateral top portions.

7. The saddle of any preceding claims, wherein the saddle is further provided with a return mechanism incorporating a spring (349) located within each of the horizontal left (344) and right (355) pivot axes, with the end of the spring (349) engaged with the sleeve (346), which is designed to store energy upon the rotation of the left (32) and right (33) lateral top portions and release said energy to return the top portions (32, 33) to their initial position, thereby providing a consistent and automatic return force for maintaining ergonomic alignment and a cyclist's comfort.

## Patentansprüche

1. Ein orthopädischer, stoßdämpfender Fahrradsattel, bestehend aus: einem Sitzteil (2) mit einem mittleren oberen Abschnitt (3), zwei seitlichen oberen Abschnitten (einem linken (32) und einem rechten (33)), einem unteren Abschnitt (4) sowie einem Stützelement (5), das sich unter dem Sitzteil (2) befindet und dafür ausgelegt ist, mit einem Fahrradrahmen verbunden zu werden, gegebenenfalls unter Verwendung einer Sattelstütze (6). Das Stützelement (5) besteht dabei aus einem vorderen Ende (51) und einem hinteren Ende (52). Der mittlere obere Abschnitt (3) ist dafür vorgesehen, dass er zumindest teilweise mit dem Körper eines Radfahrers in Kontakt kommt. Der mittlere obere Abschnitt (3) weist einen hinteren Teil (30) und einen länglichen vorderen Teil (31) auf. Der untere Abschnitt (4) weist hingegen einen hinteren Teil (40) und einen vorderen Teil (41) auf. Das Sitzteil (2) ist dabei an seinem länglichen vorderen Teil (41) schwenkbar am vorderen Ende (51) des Stützelements (5) befestigt, sodass sich das Sitzteil (2) relativ zum Stützelement (5) schwenken lässt. Der Sattel beinhaltet einen mit einer komprimierbaren Substanz gefüllten Dämpfer (60). Das Stützelement (5) und/oder das Sitzteil (2) ist mit einer Aussparung (61) versehen, die dafür ausgelegt ist, den Dämpfer (60) aufzunehmen, sodass sich der wesentliche Teil des Sitzteils (2) auf den Dämpfer (60) stützen kann, der dadurch den Schwenkbereich des Sitzelements (2) gegenüber dem Stützelement (5) begrenzt. Der Dämpfer (60) hat einen Kanal (62) mit einem Ventil (63), mit dem die Menge der komprimierbaren Substanz im Dämpfer (60) steuerbar geregelt werden kann, wodurch der Druck im Dämpfer (60) auf einen optimalen Wert eingestellt wird. Der linke (32) und der rechte (33) seitliche obere Abschnitt am Sitzteil (2) sind in einem Abstand voneinander links und rechts vom mittleren oberen Abschnitt (3) mittels je einer linken (34) und einer rechten (35) horizontalen Schwenkeinrichtung drehbar gelagert, mit je einer linken (344) und einer rechten (355) horizontalen Schwenkachse, die im Wesentlichen nahe am hinteren Teil (30) des mittleren oberen Abschnitts positioniert sind, sodass sie sich nahe oder direkt unter der Stelle befinden, an der sich typischerweise die Sitzbeinhöcker eines Radfahrers befinden würden. Diese horizontalen Schwenkachsen (334, 335) stehen dabei im Wesentlichen orthogonal zu einer der vertikalen Schwenkachsen des mittleren oberen Abschnitts (3). Jeder seitliche obere Abschnitt (32, 33) ist dabei so angeordnet, dass er sich unabhängig vom anderen um die horizontale Schwenkachse und gemeinsam mit dem anderen um die vertikale Schwenkachse drehen kann, was eine dynamische Anpassung an die Beinbewegungen des Radfahrers ermöglicht. Der Fahrradsattel **ist dadurch gekennzeichnet, dass** der Dämpfer (60) mindestens drei miteinander verbundene Kammern enthält: eine erste (601), eine zweite (602), eine dritte (603) und gegebenenfalls eine vierte (604), die dazu ausgelegt sind, die komprimierbare Substanz nacheinander durch Drosseln zwischen benachbarten Kammern zu leiten. Dadurch wird eine kontrollierte und schrittweise Stoßdämpfung ermöglicht, indem die komprimierbare Substanz von der ersten Kammer (601) über eine erste Drossel (701) in die zweite Kammer (602), von der zweiten Kammer (602) über eine zweite Drossel (702) in die dritte Kammer (603), und gegebenenfalls von der dritten Kammer (603) zur vierten Kammer (604) über eine dritte Drossel (703) geleitet wird.

2. Fahrradsattel gemäß Patentanspruch 1, wobei sich die dritte (603) oder die vierte (604) Kammer des Dämpfers (60) im inneren Hohlraum der Sattelstütze (6) befindet.

3. Fahrradsattel gemäß Patentanspruch 1 oder 2, wobei sowohl der linke (32) als auch der rechte (33) seitliche obere Abschnitt eine Form aufweisen, in der eine Seite länger ist als die gegenüberliegende Seite. Die längere Seite zeigt dabei nach innen in Richtung des mittleren oberen Abschnitts (3) und die kürzere Seite nach außen. Der linke seitliche obere Abschnitt (32) und der rechte seitliche obere Abschnitt (33) sind beide dafür ausgelegt, die Sitzbeinhöcker eines Radfahrers dynamisch zu stützen und sich dadurch an verschiedene Tretbewegungen und Fahrpositionen anzupassen, während gleichzeitig eine optimale Druckverteilung und ergonomische Unterstützung gewährleistet werden.

4. Fahrradsattel gemäß Patentanspruch 3, wobei jeder seitliche obere Abschnitt (32, 33) im Wesentlichen eine Trapezform aufweist und so ausgerichtet ist, dass seine längere Basis nach innen in Richtung des zentralen oberen Abschnitts (3) und seine kürzere Basis nach außen zeigt.

5. Fahrradsattel gemäß Patentanspruch 1 oder 2, wobei sowohl der linke (32) als auch der rechte (33) seitliche obere Abschnitt eine Form haben, in der die seitlichen oberen Abschnitte ein abgerundetes, ovales oder ellipsoides Profil aufweisen, um eine konkave Oberfläche zu bilden. Der linke seitliche obere Abschnitt (32) und der rechte seitliche obere Abschnitt (33) sind beide dafür ausgelegt, die Sitzbeinhöcker eines Radfahrers dynamisch zu stützen und sich dadurch an verschiedene Tretbewegungen und Fahrpositionen anzupassen, während gleichzeitig eine optimale Druckverteilung und ergonomische Unterstützung gewährleistet werden.

6. Fahrradsattel gemäß jedem der vorangegangenen Patentansprüche wobei die linke (34) und die rechte (35) horizontale Schwenkeinrichtung einen linken (32) und einen rechten (33) seitlichen oberen Anschlagmechanismus enthält. Diese sind dazu ausgelegt, den Drehwinkelbereich des linken (32) und des rechten (33) seitlichen oberen Teils zu begrenzen. Die Anschlagmechanismen bestehen dabei aus den folgenden Komponenten:
- Einem Stopper (348), der lösbar jeweils an der linken (344) und der rechten (355) horizontalen Schwenkachse befestigt ist
- Einer Hülse (346), die sich jeweils im linken (32) und rechten (33) seitlichen oberen Abschnitt befindet, und die horizontalen linken (344) und rechten (355) Schwenkachsen zumindest teilweise umschließt. Die Hülse (346) ist mit einem Schlitz (347) versehen, der mit dem Anschlag (348) in Eingriff kommt, wodurch eine kontrollierte Drehung der seitlichen oberen Abschnitte innerhalb des definierten Bereichs ermöglicht wird. Dadurch wird eine Begrenzung des Drehwinkels des linken (32) und des rechten (33) seitlichen oberen Abschnitts erreicht.

7. Fahrradsattel gemäß jedem der vorangegangenen Patentansprüche, wobei der Sattel ferner mit einem Federrückzugsmechanismus versehen ist, der je eine Feder (349) enthält, die innerhalb jeder der horizontalen linken (344) und rechten (355) Schwenkachsen angeordnet ist. Das Ende der Feder (349) steht mit der Hülse (346) in Eingriff, die so ausgelegt ist, dass sie bei der Drehung der linken (32) und rechten (33) seitlichen oberen Teile Energie speichert und diese Energie freisetzt, um die oberen Teile (32, 33) in ihre Ausgangsposition zurückzubringen, wodurch eine gleichmäßige und automatische Federrückzugskraft zur Aufrechterhaltung der ergonomischen Ausrichtung und des Komforts des Radfahrers bewirkt wird.

## Revendications

1. Selle de bicyclette orthopédique absorbant les chocs, comprenant : un élément d'assise (2) ayant une portion supérieure centrale (3), deux portions supérieures centrales : gauche (32) et droite (33), une portion inférieure (4) et un élément de support (5) sous-jacent à l'élément d'assise (2) et destiné à être relié à un cadre de bicyclette, facultativement à l'aide d'une tige de selle (6) ; l'élément de support (5) ayant une extrémité avant (51) et une extrémité arrière (52) ; la portion supérieure centrale (3) est destinée à être au moins partiellement en contact avec un cycliste ; la portion supérieure centrale (3) ayant une partie arrière (30) et une partie avant allongée (31) ; la portion inférieure (4) ayant une partie arrière (40) et une partie avant (41) ; au niveau de sa partie avant allongée (41) l'élément d'assise (2) étant fixé de manière pivotante à l'extrémité avant (51) de l'élément de support (5), permettant à l'élément d'assise (2) de pivoter par rapport à l'élément de support (5) ; la selle comprenant en outre un amortisseur (60) rempli d'une substance compressible ; l'élément de support (5) et/ou l'élément d'assise (2) sont pourvus d'une cavité (61), adaptée pour loger dans celle-ci l'amortisseur (60), de sorte que la partie substantielle de l'élément d'assise (2) peut s'appuyer sur l'amortisseur (60), ce qui limite de ce fait la plage de mouvement de pivotement de l'élément d'assise (2) par rapport à l'élément de support (5) ; l'amortisseur (60) comprend un canal (62) avec une valve (63), destinée à permettre un ajustement réglable de la quantité de la substance compressible dans l'amortisseur (60), ajustant de ce fait la pression dans l'amortisseur (60) à une valeur optimale ; dans laquelle les portions supérieures centrales gauche (32) et droite (33) sont montées de manière rotative sur l'élément d'assise (2) dans une configuration espacée vers les côtés gauche et droit de la portion supérieure centrale (3) par des moyens de pivotement horizontal gauche (34) et droit (35) ayant des axes de pivotement horizontaux gauche (344) et droit (355) sensiblement positionnés à proximité de la partie arrière (30) de la portion supérieure centrale, pour être près ou directement en dessous de l'endroit où des tubérosités ischiatiques d'un cycliste se trouveraient typiquement, ces axes de pivotement horizontaux (334, 335) étant agencés sensiblement orthogonaux à un axe de pivotement vertical de la portion supérieure centrale (3) ; et dans laquelle chaque portion supérieure centrale (32, 33) est agencée pour effectuer une rotation séparément de l'autre autour de l'axe de pivotement horizontal, et d'effectuer une rotation conjointe avec l'autre autour de l'axe de pivotement vertical, permettant une adaptation dynamique aux mouvements de jambes du cycliste ; **caractérisé en ce que** l'amortisseur (60) comprend au moins trois chambres reliées entre elles : une première (601), une deuxième (602), une troisième (603) et, facultativement, une quatrième (604), destinées à transférer séquentiellement la substance compressible à travers des étranglements entre des chambres adjacentes, facilitant de ce fait une absorption contrôlée et progressive des chocs en dirigeant la substance compressible de la première chambre (601) à la deuxième chambre (602) par l'intermédiaire d'un premier étranglement (701), de la deuxième chambre (602) à la troisième chambre (603) par l'intermédiaire d'un deuxième étranglement (702) et, facultativement, de la troisième chambre (603) à la quatrième chambre (604) par l'intermédiaire d'un troisième étranglement (703).

2. Selle selon la revendication 1, dans laquelle la troisième (603), ou la quatrième (604) chambre de l'amortisseur (60) est localisée dans la cavité interne de la tige de selle (6).

3. Selle selon la revendication 1 ou 2, dans laquelle chacune des portions supérieures centrales gauche (32) et droite (33) est définie par une forme ayant une configuration dans laquelle un côté est plus long que le côté opposé, avec le côté plus long orienté vers l'intérieur en direction de la portion supérieure centrale (3) et le côté plus court faisant face vers l'extérieur ; les portions supérieures centrales gauche (32) et droite (33) sont destinées à supporter dynamiquement les *tubérosités ischiatiques* d'un cycliste, s'adaptant de ce fait à divers mouvements de pédalage et à diverses positions de roulage tout en assurant une distribution optimale de pression et un support ergonomique.

4. Selle selon la revendication 3, dans laquelle chaque portion supérieure centrale (32, 33) est de forme sensiblement trapézoïdale, et orientée avec sa base plus longue faisant face vers l'intérieur en direction de la portion supérieure centrale (3) et la base plus courte faisant face vers l'extérieur.

5. Selle selon la revendication 1 ou 2, dans laquelle chacune des portions supérieures centrales gauche (32) et droite (33) est définie par une forme ayant une configuration dans laquelle les portions supérieures centrales sont d'un profil arrondi, ovale ou ellipsoïdal pour former une surface concave ; les portions supérieures centrales gauche (32) et droite (33) sont destinées à supporter dynamiquement les *tubérosités ischiatiques* d'un cycliste, s'adaptant de ce fait à divers mouvements de pédalage et à diverses positions de roulage tout en assurant une distribution optimale de pression et un support ergonomique.

6. Selle selon de quelconques revendications précédentes, dans laquelle les moyens de pivotement horizontal gauche (34) et droit (35) comprennent des mécanismes de butée de portions supérieures centrales gauche (32) et droite (33) destinés à limiter la plage d'angle de rotation des portions supérieures centrales gauche (32) et droite (33) ; les mécanismes de butée comprenant:
- une butée (348) fixée de manière libérable dans chacun des axes de pivotement horizontaux gauche (344) et droit (355) ;
- un manchon (346) localisé au sein de chacune des portions supérieures centrales gauche (32) et droite (33) est adapté pour enserrer au moins partiellement les axes de pivotement horizontaux gauche (344) et droit (355) ; le manchon (346) est pourvu d'une fente (347) conçue pour venir en prise avec la butée (348), permettant une rotation contrôlée des portions supérieures centrales au sein de la plage définie, en permettant de ce fait une limitation de l'angle de rotation des portions supérieures centrales gauche (32) et droite (33).

7. Selle selon de quelconques revendications précédentes, dans laquelle la selle est pourvue en outre d'un mécanisme de retour incorporant un ressort (349) localisé au sein de chacun des axes de pivotement horizontaux gauche (344) et droit (355), avec l'extrémité du ressort (349) en prise avec le manchon (346), qui est destiné à stocker de l'énergie lors de la rotation des portions supérieures centrales gauche (32) et droite (33) et libérer ladite énergie pour ramener les portions supérieures (32, 33) à leur position initiale, en fournissant de ce fait une force de retour constante et automatique pour le maintien d'un alignement ergonomique et le confort d'un cycliste.
